# EUROPEAN PATENT SPECIFICATION

(11) **EP 3 075 869 B1**
(45) Date of publication and mention of the grant of the patent: **17.10.2018**
(21) Application number: 15000931.4
(22) Date of filing: 30.03.2015
(51) Int. Cl.: C21C 7/00, C21C 5/52, C22C 38/02, C22C 38/06

(54) **METHOD FOR PRODUCTION OF IRON-SILICON-ALUMINUM ALLOYS**
VERFAHREN ZUR HERSTELLUNG VON EISEN-SILICIUM-ALUMINIUM-LEGIERUNGEN
PROCÉDÉ DE PRODUCTION D'ALLIAGES FER-SILICONE-ALUMINIUM

(43) Date of publication of application: 05.10.2016
(73) Proprietor: Megalloy AG, 9000 St. Gallen (CH)
(72) Inventor: Nazarbayev, Nursultan Abishevich, 010000 Astana city (KZ); Shkolnik, Vladimir Sergeyevich, 010000 Astana city (KZ); Zharmenov, Abdurassul Aldashevich, Almaty city (KZ); Tolymbekov, Manat Zhaksybergenovich, 100009 Karaganda city (KZ); Baysanov, Saylaubay Omarovich, 100009 Karaganda city (KZ)
(74) Representative: Döpp, Ludger

(56) References cited:
- EP-A1- 1 122 319
- DE-T5-112010 002 970
- US-A- 3 759 695
- US-A- 5 634 960

## Description

The invention pertains to a method of producing of an iron-silicon-aluminum master alloy.

Ferrosilicon is a master alloy which, in particular, is used for steel and cast iron production, if appropriate together with other materials such as aluminum. Density and melting point of ferrosilicon significantly depends on the content of silicon. The higher the silicon content (mass %) the lower is its density. Generally for doping of steel alloys standard ferrosilicon alloys are used such as FeSi 45, FeSi 65 and FeSi 75. Said master alloys belong way back to the proved initial materials for reducing and doping of steel alloys. Subject to the required quality of the alloyed or reduced steel one more doping element - aluminum - is added to the melt.

DE 22 23 974 B2 describes a method of producing a doping alloy for reducing and doping of steel which uses a carbonaceous rock with 40 to 50 mass % ash content, 15 to 25 mass % volatile matter, 15 to 25 mass % combined carbon and 2 to 6 mass % sulphur, with calorific capacity of 1.500 to 2.000 kcal/kg as original stock for melting it into a carbon alloy, containing of 25 - 50 mass % Si, 10 - 40 mass. % aluminum, 2 - 10 mass % calcium, 0,5 - 2,5 mass % titanium, balance iron and subject to technical specifications various admixtures, as well as micro-admixtures of vanadium and boron if required.

It is known in the prior art (DE 28 53 007 A1) the method of producing silicon-containing ferroalloys which consists of pelletizing the mixture of a carbonaceous reducing agent and leading element ore of the resulting alloy with addition of quartzite, of received charge material into the melting furnace and in the following continuous single-stage recovery of the resulting alloy elements.

RU 2251586 C2 discloses a method of producing of ferro-silicon-aluminum alloys using carbonaceous rock with 15 - 35% carbon, as a silicon-aluminum containing material, with additional charging of coke and/or quartzite. By this way smelting of an aluminum-silicon alloy with an aluminum content of 5 to 35% is carried out.

EP 2 295 614 B1 describes an alloy for reducing and doping of steel with the following composition (mass %):

| | |
|---|---|
| Silicon | 45 - 63 |
| Aluminum | 10 - 25 |
| Calcium | 1 - 10 |
| Barium | 1 - 10 |
| Vanadium | 0,3 - 5 |
| Titanium | 1 - 10 |
| Carbon | 0,1 - 1 |
| Balance - iron and admixtures. | |

EA 201100824 A1 describes a method of smelting ferro-silicon-aluminum alloys. Carbonaceous rock, quartzite, metal scrap and wood chips are used as raw materials. The charge materials are sieved to < 20 mm size, whereby 75% thereof is charged onto the furnace peripherals.

UA 6198 U describes a method of production of complex deoxidizers (reducers), in particular, ferro-silicon-aluminum alloys. These reducers are used preferably for dead-melted and rimming steels (for steel melting). Raw material for this method is metal scrap.

CN 102839257 A discloses a FeSiAl based reducer used for steel production and having the following composition (mass.-%): 48 - 54% Al, 18 - 22% Si, 0.06 - 0.6% C, 0.006 - 0.05% S, 0.01 - 0.05% P, 0.17 - 0.6% Cu, balance - Fe.

A similar alloy is described in CN 102839292 A having the following composition (mass.-%): 20 - 30% Al, 45 - 55% Si, 22 - 28% Fe. Following elements can be present as admixtures: < 0.008% C, < 0.02% P, < 0.02% S, < 0.05% Cu, < 0.005% Ti, < 1.0% Mn, < 0.05% N.

US 5,634,960 describes a method for continuously converting ferrous scrap metal into an iron for foundry purposes comprising the steps of:
(a) feeding to a submerged arc open or closed furnace having a one or more electrodes a charge comprising:
   (i) ferrous scrap metal wherein said scrap metal comprises 80 - 99 % by weight scrap iron;
   (ii) about 1 to about 20 % by weight scrap of quartzite,
   (iii) about 5 to about 15 % by weight scrap of carbonaceous mate rial, and
   (iv) about 0 to about 10 % by weight scrap of wood chips;
(b) melting said charge in said furnace such that said furnace contains a molten layer and a layer of solid charge above said molten layer;
(c) positioning said one or more electrodes immediately above said molten layer;
(d) maintaining said layer of solid charge in said furnace such that said layer of solid charge completely covers said molten layer and extends from the side walls of said furnace to surround said one or more electrodes; and
(e) tapping said furnace to remove from said molten layer a molten iron suitable for foundry purposes and having a silicon content of about 0.5 to about 4 % by weight and a carbon content of about 2 to about 5 % by weight.

US 3,759,695 describes a process for making ferrosilicon which comprises
(1) forming a mixture of finely divided carbon, iron ore and silica into agglomerates, the proportions of iron and silicon in said agglomerates being such as to provide a ferrosilicon alloy containing 45 to 50 % Si upon reduction of the iron ore and silica to the metallic state, and the amount of carbon being between about 105 and 115 % of the amount theoretically required to react with the silica to produce silicon metal and carbon monoxide;
(2) charging the agglomerates into an electric furnace;
(3) heating the briquettes in the electric furnace by means of an electrode submerged in the agglomerate charge to cause reduction of the briquette material and the formation of a molten ferrosilicon alloy; and
(4) subsequently tapping the molten ferrosilicon alloy from the electric furnace.

EP 1122319 A1 describes a process of recycling mill scale of alloyed steel in an electric arc furnace. Within that furnace a ferrous silicon alloy containing greater than 40 % Si shall be treated. The ferrous silicon alloy shall contain 40 to 80 % Si, 1 to 5 % Cr, optionally further elements up to 5 %.

DE 11201002970 discloses a method involving loading feedstock and feeding pressurized natural gas and either air or oxygen from below to a melt the feedstock using a gas and air or gas and oxygen torch. The natural gas and either air or oxygen are fed via a non-water-cooled gas and air or gas and oxygen injector in the form of two concentrically mounted pipes, which is situated in an opening in a nozzle of the ladle slide gate and is surrounded by dry refractory sand. The natural gas is fed through the outer pipe and the air or oxygen is fed through the inner pipe. The ladle furnace is covered with a lid that is provided with electrodes and the feedstock is additionally melted from the top by electric arcs. After the melting process, a primary slag is skimmed from the ladle furnace, fluxing reagents are added to produce a secondary slag and inert gases and flag-forming reagents are blown in from below, combining this process with boiling, reduction, alloying, deep desul-phurization and dephosphorization and the homogenization of the chemical composition and temperature of the finished steel.

The known prior art reflecting the process of FeSiAl production is distinct in high carbide forming in slag which is negatively affecting FeSiAl production. In the event the melting furnace becomes impracticable or must be picked out for the next operation which is extremely expensive.

The object of the present invention is to provide for an efficient low-cost production of a FeSIAl master alloy out of simple and cheap raw materials without carbide forming in the melt during the melting process.

Besides, there should be offered an opportunity to replace alloys for reducing and doping of steel, such as ferrosilicon and aluminum which earlier were applied separately.

This objective is solved by Method of producing FeSiAl alloys wherein a carbonaceous rock with an ash content > 50% to < 65%, is being mixed with quartzite, iron-bearing material, and wood chips if required, high-volatile coal, in a preset ratio of the charge components and the homogenized charge material is being loaded into a melting furnace for melting of FeSiAl alloys, wherein the chemical composition of the ash content of the mineral part of the charged carbonaceous rock comprises,

| | |
|---|---|
| Fe₂O₃ | 1.5 - 4.5% |
| SiO₂ | 55 - 65% |
| Al₂O₃ | 32 - 34% |
| CaO | 0.3 - 3% |
| MgO | 0.3 - 2% |
| TiO₂ | up to 1.5% |
| S | 0.2 - 0.4% |
| P | 0.01 - 0.05% |

Advantageous improvements of the claimed method can be examined in the corresponding dependent method claims.

The charge is to be mixed and homogenized preferably outside the melting furnace whereby is to be loaded cone up into the melting furnace with Søderberg electrodes and then the FeSiAl alloy is being smelted.

As opposed to the prior art this method enables to produce FeSiAl master alloys using cheap raw materials (carbonaceous rock, quartzite, iron-bearing material), replacing at the same time common ferrosilicon alloys and addition of aluminum if required.

Distinct from the known prior art the claimed method allows to avoid the use of coke. By a calculated addition of iron-bearing material it is possible to prevent efficiently an undesirable formation of silicon carbides in the melt or considerably decrease it to a minimum. By virtue of the ultimate fall-off of the carbide forming a monolithic dense master alloy is being received which can be used for deoxidation and doping of steel as well as reducing of magnesium.

Preparation of the carbonaceous rock is carried out e.g. in jaw or rolling crushers, as well as similar mills. Specifically it is preferable to use grain sizes between 20 mm and 80 mm to be charged into the melting furnace.

Under the term carbonaceous rock a specialist understands a coal-bearing rock with > 45% to 65% ash content. The carbonaceous rock is a low caloric high-ash layer between the coal layers.

Carbonaceous rock in different deposits has different qualitative attributes and contents. For the claimed method it is preferable to use carbonaceous rock with higher electrical resistance of the rock. Preferred is the range of resistance between 10⁻⁶ and 10⁻¹Ωm. The higher the electrical resistance of the rock the better is it to control the furnace temperature.

The charged carbonaceous rock with ash content of 50% - < 65% wherein the chemical composition of the ash content of the mineral part of the charged carbonaceous rock comprises,

| | |
|---|---|
| Fe₂O₃ | 1.5 - 4.5% |
| SiO₂ | 55 - 65% |
| Al₂O₃ | 32 - 34% |
| CaO | 0.3 - 3% |
| MgO | 0.3 - 2% |
| TiO₂ | up to 1.5% |
| S | 0.2 - 0.4% |
| P | 0.01 - 0.05% |

If appropriate quartzite can be added or like carbonaceous rock crushed in an adequate mill whereas the preferred grain sizes are from 25 mm to 60 mm. Usually quartzite consists of 97-98% SiO₂ and 1-2% Al₂O₃.

Iron turnings, burning scale and iron-bearing oxides in the form of hematite and various iron ores and concentrates can serve as iron-bearing material. Preferred are iron turnings.

Iron turnings are added in sizes 5 to 50 mm. Iron turnings can be at least partially oxidized whereas the film oxide thickness should not exceed 0,7 mm. Iron turnings can originate from common wastes of metalworking productions, e.g., milling machines, cutters, etc. Hence turnings can be considered as small sized iron fragments preferably with a large oxidizable surface.

As appropriate a certain portion of wood chips or high-volatile coal can be added to the charge mixture. Grain size is preferred to be from 50 mm to 100 mm.

Similarly wood chips with > 50% volatiles are added to the primary material, if needed.

If instead of wood chips e.g. a high-volatile coal is used it has to have more than 40% of volatile matters.

As already mentioned coke is not used as a primary material. Coke has not enough or has no volatile matters at all and it does not facilitate sufficient porosity of the furnace charge. In case of wood chips or high-volatile coal this is different because they have high percentage of volatile matters.

The main raw materials (carbonaceous rock, quartzite and iron-bearing material) with the required grain sizes are being stored separately in hoppers. Should the need arise to add wood chips or high-volatile coal they are also stored in separate hoppers.

Based on the capacity of the melting furnace, the raw stock - carbonaceous rock, quartzite and iron turnings, and, if required wood chips or high-volatile coal, are mixed in a defined share proportion preferably outside the melting furnace and are charged to the melting furnace preferably equipped with Søderberg electrodes.

The preferred product should be a FeSiAl master alloys with the following composition (mass %):

| | |
|---|---|
| Si | 40 - 85% |
| Al | > 1 - < 40% |
| C | > 0.001 - < 1.0% |
| Ti | 2% max |
| Ca | < 1.0% |
| P | < 0.05% |
| S | < 0.1% |
| Mn | 0.7% max |
| Fe | balance |

An equipment operating as per claimed method consists of a melting furnace with at least one Søderberg electrode, various hoppers and bins for storage, at least, of carbonaceous rock containing Si and Al oxides, quartzite, and also iron-bearing materials, if needed hoppers for wood chips or high-volatile coal, if needed preparation and crushing units at least for carbonaceous rock and if necessary for quartzite, mixing and dosing devices for charging mixture, and feeder units for feeding specifically homogeneous mixed charging material around the furnace electrodes.

Advantageous improvements of the claimed equipment can be examined in the corresponding dependent claims.

As already presented the furnace is equipped with several Søderberg electrodes, thus, in particular, the mixed homogeneous charging material is loaded cone-up wise around the electrode(s). Here are used special charging tubes located around the electrode(s). If the desirable conical form is not reached by common furnace charge feeding, special mechanical scrapers are used.

The smelted FeSiAl material can be advantageously used for steel deoxidizing and doping.

Alternatively it is also possible to use another quality of FeSiAl in the process of manufacturing of magnesium alloys e.g. as a reducing agent.

Furthermore it is practical to use FeSiAl alloy for production of various refined brands of ferroalloys.

Table 1a shows examples of molten FeSiAl master alloys which could be used for steel production.

**Table 1a**

| Alloy Grade | FeSiAl 45/15 | FeSiAl 55/20 | FeSiAl 65/15 |
|---|---|---|---|
| Silicon Si | 45% | 55% | 65% |
| Aluminum Al | 15% | 20% | 15% |
| Iron Fe | 38% | 23% | 18% |
| Titanium Ti | 1% | 1% | 1% |
| Specific density | 4.5 g/cm³ | 4.0 g/cm³ | 3.8 g/cm³ |

| | | | |
|---|---|---|---|
| *) about 1 mass % of the total impurities Ca, P, S, Mn, Cr can be ignored | | | |

Table 1b shows examples of consumption of quartzite and iron per 1 ton of FeSiAl alloy.

**Table 1b**

| | | | |
|---|---|---|---|
| Quantity of carbonaceous rocks | 2.5 t | 3.15 t | 2.8 t |
| Ash content of carbonaceous rock | 55% | 58% | 56 % |
| | V =20 W=4 | V =18 W=4 | V =22 W=4 |
| Quartzite qty. | 0.5 t | 0.42 t | 0.9 t |
| Fe total, incl. | 0.315 t | 0.158 t | 0.14 t |
| Fe from electrodes | 0.015 t | 0.018 t | 0.02 t |
| Fe turnings | 0.30 t | 0.14 t | 0.12 t |

Total iron content percentage consists of:
- iron ratio from carbonaceous rock
- iron ratio from iron turnings (iron turnings are cited also as iron-bearing material).
- iron ratio from melting electrodes.
A thin slag layer, as a rule < 3.5 g/cm³, lies on the melt during the steel production.

The addition of the iron turnings is of considerable technical importance for reaching assigned density of each FeSiAl alloy as per above Table 1a. The ratio of Fe total/Fe from turnings should be between 1.1 and 1.35, more specific 1.2 and 1.3.

Due to the above indicated density FeSiAl alloys (table 1a) do not float to the surface of the steelmaking slag but rather penetrate through it thus fulfilling their mission namely: deoxidation or doping of steel.

Aluminum has a density of 2.2 g/cm³. It can happen In traditional combinations of FeSi + Al that aluminum does not penetrate into steel volume and floats on the surface of the steelmaking slag. Such cannot happen to FeSiAl as the density increases by virtue of addition of iron turnings.

Table 2a shows examples of FeSiAl melted alloys which can be used in magnesium production.

**Table 2a**

| Alloy Type | FeSiAl 75/10 | FeSiAl 80/7 |
|---|---|---|
| Silicon Si | 75 % | 80 % |
| Aluminum Al | < 10 % | < 10 % |
| Iron Fe | 13% | < 10 % |
| Titanium Ti | < 1 % | < 1 % |
| Specific density | 3.5 g/cm³ | 3.3 g/cm³ |

| | | |
|---|---|---|
| *) about 1 mass % of the total impurities Ca, P, S, Mn, Cr can be ignored | | |

Table 2b shows examples of consumption of quartzite and iron per 3 tons of carbonaceous rock.

**Table 2b**

| Alloy Grade | FeSi45Al15 | FeSi55AI20 |
|---|---|---|
| Quantity of carbonaceous rock | 3.0 t | 3.0 t |
| Ash content carbonaceous rock V =20 W=4 | 55 % | 55 % |
| Fe total, incl. | 0.58 t | 0.57 t |
| Fe from electrodes | 0.375 t | 0.18 t |
| Fe turnings | 0.015 t | 0.012 t |
| Fe total, incl. | 0.36 t | 0.16 t |

Application of iron-bearing materials more specifically iron turnings in combination with the carbonaceous rock with high electric resistance more specifically 10⁻⁶ and 10⁻¹Ω, and also quartzite, if necessary with addition of wood chips or high-volatile coal for the first time ever gives the chance to considerably reduce formation of silicon carbides during smelting FeSiAl alloys. In this case it is possible to use cheap raw materials: carbonaceous rock, quartzite and iron turnings that represents a more economical alternative to traditional raw materials FeSi + Al. In particular purposeful addition of iron turnings increases density of the melted FeSiAl master alloy so that can be reached already described advantages of application of this master alloy in production of steel and magnesium.

Contingent on the implemented carbonaceous rock it may contain up to 1.5% of titanium which is not affecting the process of deoxidation and doping of steel or reduction of magnesium.

Iron oxide (FeO) on the surface of turnings disrupts silicon carbide (SiC) and prevents the carbide forming process during the FeSiAl production.

As already mentioned sometimes it is possible to add a pre-measured amount of wood chips and alternatively high-volatile coal, thus these materials are used only as an aerator for the furnace charge in order to avoid its sintering on the furnace mouth and to achieve a uniform emission of the reaction gases.

Nowadays in the world market there exist, i.a., standard alloys of FeSi65 and FeSi75 which are universally used combined with addition of aluminum in the production of steel or magnesium.

The FeSiAl alloy produced under the claimed method substitutes the above mentioned alloys FeSi75 (+AI) and FeSi65 (+AI).

As a result of the desired prevention of carbide forming during the FeSiAl smelting a dense alloy as master alloy is being made which contributes to better quality of the respective steel and magnesium grades.

Depending on the subsequent compositions of steel and magnesium the content of iron turnings amounts to 5 to 20% of the total mass of the primary materials.
The best way is to add iron turnings with a big surface, thus the length of the coils chips may be up to 50-60 mm.

The excess of the iron-bearing material decreases the concentration of basic elements - aluminum and silicon, and its lack leads to undesirable carbide forming in the melt and the master alloy melting process is impaired.

The grain size of the furnace charge for carbonaceous rock and for quartzite has to be > 20-80 mm.

The known process employs a melting furnace equipped with so called Søderberg electrodes (made of carbon and steel casing). Carbon is slowly reacting with the loaded furnace charge and is partially acting as deoxidizer. Iron in a very scarce mass is converted from the electrode casing into the master alloy melt.

If needed it is possible to use oxide scale, hematite, iron ore and concentrates instead of iron turnings but these materials do not prevent carbide forming as efficient as iron turnings. Another advantage is the fact that application of the object of invention allows to meet the customers' requirements. So for instance, if required, it is possible to add to the furnace charge and to melt other primary oxide elements either single or combined such as barium, vanadium, calcium, etc. in form of ores or similar.

The below table indicates oxide components to be added if required:

| | |
|---|---|
| Ca | 0.05 - 7.0% |
| Ba | 1.5 - 15% |
| V | 0.5 - 10 % |
| Ti | 0.05 - 10% |
| Cr | 5 - 20% |
| Mn | 5 - 20 % |

Examples of embodiments of the invention are presented and described as follows:
- Fig. 1 to 3: Diagrams of handling and processing of raw materials, carbonaceous rock, quartzite and iron turnings;
- Fig. 4 and 5: Diagrams of the melting furnace with several electrodes in different views.

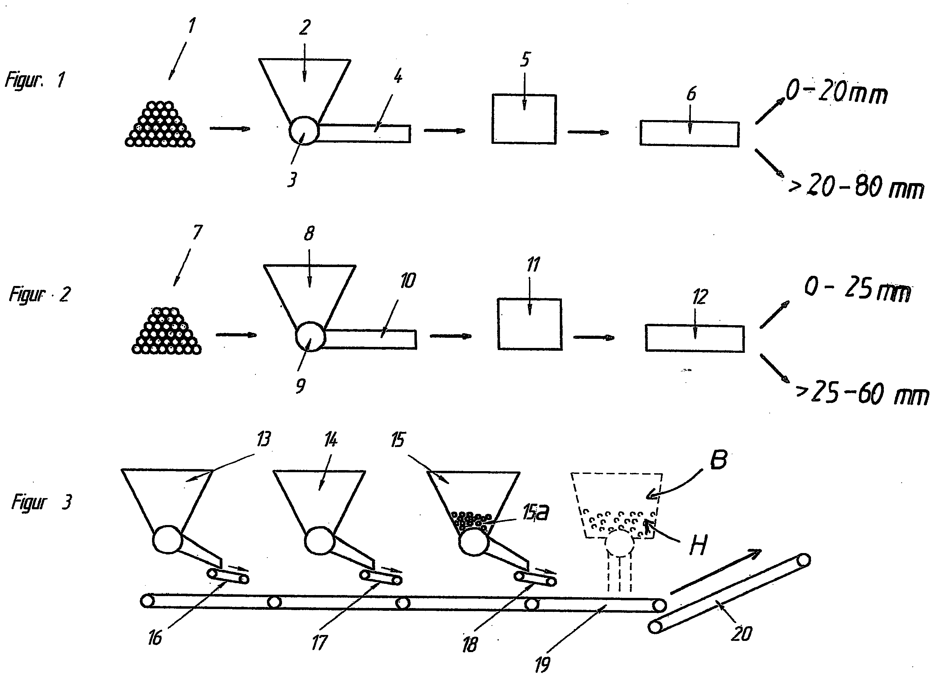

Figures 1 - 3 show diagrams of handling and processing of raw materials, carbonaceous rock, quartzite and iron turnings;
Fig.1 and 2 are constructed similarly, thus Fig. 1 represents crushing and screening of carbonaceous rock and Fig. 2 the same of quartzite.

The supplied carbonaceous rock 1 is being fed to bin 2 connected to a vibration feeder 3 or a similar device. Through only indicated conveyor 4 the carbonaceous rock 1 gets into the crusher 5, for example a jaw crusher. In this way the crushed carbonaceous rock 1 is being screened with a screen 6 to grain sizes 0 to 20 mm and > 20 to 80 mm. Grain size > 20 to 80 mm is further being used in the furnace charge.

Fig. 2 represents handling of quartzite 7 which is also being fed into bin 8. From the vibration feeder 9 and conveyor belt 10 quartzite is transported to crusher unit 11, another jaw crusher if required, and then is being screened through screen 12 to grain sizes 0 to 25 mm, as well as > 25 to 60 mm. Size > 25 to 60 mm is being further used for production. If quartzite 7 is not crushed/screened on-site it can be delivered already crushed.

In further process stages the respective mixture carbonaceous rock > 20 to 80 mm and quartzite > 25 to 60 mm is being fed via conveyors to hoppers 13, 14 (Fig. 3).

Another hopper 15 contains also required primary material - iron-turnings 15a with size between 5 and 100 mm, preferably 5 to 50 mm. Through a dosing straingauge weigher 16, 17, 18 the preset portions of carbonaceous rock 1 (hopper 13), quartzite 7 (hopper 14), as well as iron turnings 15a (hopper 15) are being transported to a belt conveyor 19, whereby the primary materials 1, 7, 15a are being homogenized.

If required another hopper B can be fed with wood chips H, size 50 - 100 mm which is admixed to the furnace charge consisting of carbonaceous rock 1, quartzite 7 and iron turnings 15a. As described earlier it is possible to use high-volatile coal instead of wood chips H.

Via next transport equipment/device 20 shown here as a belt conveyor the prepared homogenized furnace charge material consisting of carbonaceous rock 1, quartzite 7 and iron turnings 15a (if required wood chips H) is being discharged into the furnace (not shown here). If necessary further homogenization steps like screw mixing or similar can be conducted on the way to the furnace which is not shown here.

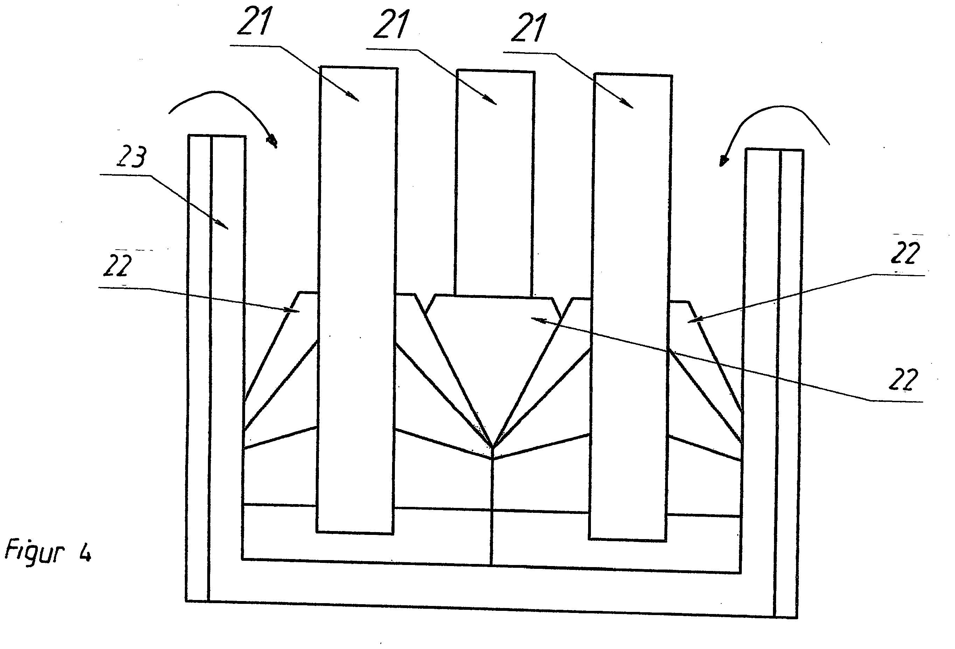

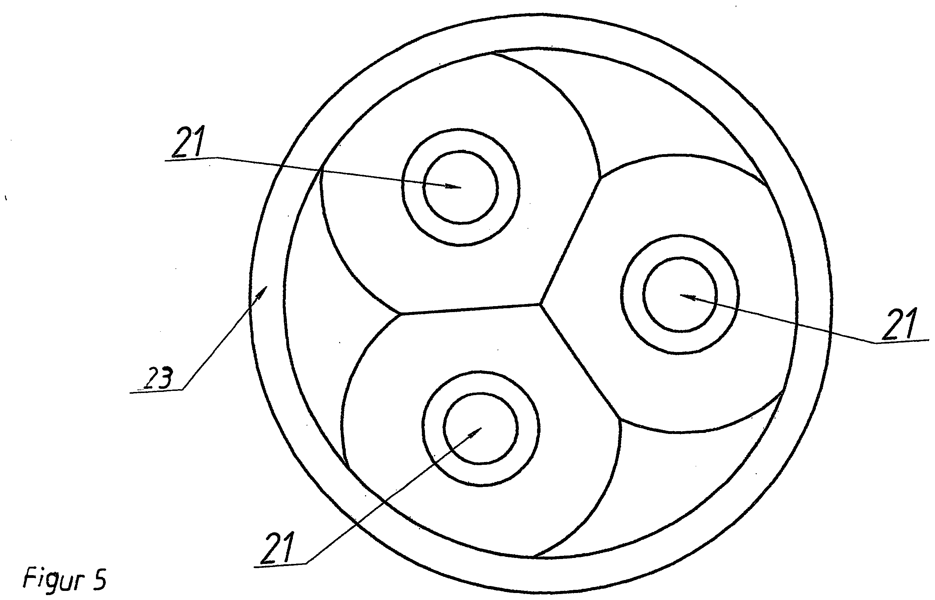

Figs. 4 and 5 represent a simplified execution of the melting furnace 23 containing several Søderberg electrodes 21. The arrows designate directions of discharging of the homogenized furnace charge consisting of carbonaceous rock 1, quartzite 7 and iron turnings 15a and if required wood chips H loaded in the only designated conical form 22 around electrodes 21. If the conical form is impossible to reach, special mechanical auxiliary devices such as scrapers, etc. come to action in order to achieve this conical form.

Further the object of the invention is described more detailed in examples:
For example: the following homogenized furnace charge materials are used to produce FeSiAl 65/15:
A. Carbonaceous rock, 3 tons, ash content 47 - 55% grain size > 20 - 80 mm Ash chemical analysis

| | |
|---|---|
| SiO₂ - | 55 - 65% |
| Fe₂O₃ | 1.5 - 4.5% |
| Al₂O₃ | 32 - 34% |
| CaO | 0.3 - 3.0% |
| TiO₂ | 0,8 - 1,2% |
| MgO | 0.3 - 2.0% |
| S | 0,2 - 0,4% |
| P | 0.01 - 0.05% |

B. Quartzite, 0.4 - 1.3 tons, grain size 25-60 mm

| | |
|---|---|
| SiO₂ | > 97% |
| Al₂O₃ | 1.0% |
| Fe₂O₃ + CaO + MgO + P₂O₃ | ≈2% |

C. Iron Turnings >0 - 0.5%

### 1. Raw material

Carbonaceous raw material (high-ash coal with ash content 45-50%, carbonaceous rock with ash content 55-65%) is characterized through a different content of ash, volatiles and humidity. For example one batch of carbonaceous raw material may contain lumps with different ash content. Therefore it is important to blend the composition of the supplied batch of the carbonaceous raw material. This can be achieved through its thorough mixing during crushing and screening and also during its storage.

Quartzite shall be delivered already screened. The effective screen size is 25-60 mm.

Iron turnings are being delivered crushed with 5 - 50 mm screen size. 50 - 100 mm oversize should not exceed 10%. The iron turnings can be oxidized. Oxide film thickness should not exceed 0.7 mm.

### 1.1. Crushing and screening of raw materials

The unit for furnace charge handling consists of a standard set of a jaw crusher and a screen - the crushing and screening unit (CSU). The set contains a bin (hopper) with a vibration feeder in which a pay-loader loads the carbonaceous stock. And the raw materials are transported to the bin from different parts of the heap. From the bin the raw materials are moved proportionally and uniformly to the crusher with 100 mm distance between the crusher jaws. After crushing the carbonaceous stock is transported to the screen having a mesh of 20 mm where the raw materials are screened into two sizes of 0 - 20 mm and > 20 - 80 mm. Size > 20 - 80 mm is the effective size needed for the production and is being stored.

### 1.2. Storage of the carbonaceous stock

After crushing the effective size of the carbonaceous stock is stored in even layers on the whole defined surface. This is achieved by using a traversing conveyor with a splitter or directly by a pay-loader. Thus is obtained a pile of 3 - 4 layers of the carbonaceous stock. The feeding of the carbonaceous stock to the weighing bin is done from the end of the pile while the layers are being mixed.

In this way mixing and blending of the raw material batch is made during crushing, piling and charging of the carbonaceous stock into the weighing bin.

### 1.3. Weighing of raw materials

Weighing is carried out with the use of common batching units consisting of a 20 - 60 m³ dispensing bin, vibration feeder, tensometric balance of strip or bin type, reversible-shuttle belt. There should be at least 3 batching units carbonaceous stock, 1 - 2 units for quartzite and 1 for iron turnings. The three batching units for the carbonaceous stock are designated for batching different batches with various ash contents. Hence it is possible to mix in different proportions the carbonaceous material of 45% and 65% ash content or coal with 30% ash content and carbonaceous rock with 65% ash thus obtaining the required average ash content needed to smelt one or another alloy grade.

The basic batching unit is one of the weighing bins for carbonaceous raw material depending on the speed with which other raw materials are transported for weighing. After weighing all raw materials are fed to one reversible-shuttle belt. The raw material is placed layer-wise on it. Thereby is reached a uniform distribution of the carbonaceous raw material, the quartzite and the iron turnings. Further the charge mix is discharged from the reversible-shuttle belt to the inclined belt conveyer which feeds the charge mix to the melting shop on a mark with furnace bins.

### 1.4. Furnace bins and furnace bath charging

The charge gets from the inclined belt conveyer through a hopper mechanism to a running inclined belt conveyor on the furnace bins mark over the furnace bath. The furnace bins are sequentially fed by furnace charge. The charge from the furnace bins is discharged into the furnace bath through charging tubes if necessary and depends on the speed of its smelting in the furnace bath. There are 10 charging tubes, i.e. three near each electrode and one charging tube in the center between the electrodes. The charge is steadily fed to the electrodes. If required it is scraped to the electrodes with special steel scrapers (for small electric furnaces of up to 5 MVA) or with special devices for charge distribution (for electric furnaces of 10 to 33 MVA) to the electrodes creating 300-600 mm high charge cones around the electrodes. It improves settling of fumes of gaseous silicon (SiO) and aluminum suboxides (Al₂O).

The ferrosilicon aluminum smelting process can be divided into three intervals depending on the temperature and preferential behavior of the different reactions.

The temperature interval/range of T = 1,400 - 1,500°C is characterized by active decrease in mullite concentration in the reaction mixture. The following reactions are taking place in this temperature interval/range depending on the way of heating the charge in this temperature interval/range:

SiO₂,_{solid} + C_{solid} = {SiO} + CO (1)

SiO₂, _{solid} + 2C_{solid} + Fe = SiFe + 2CO (2)

[Si] + C_{solid} = SiC (3)

SiO + C_{solid} = Si_{liquid} + CO (4)

{SiO} + 2C_{solid} = SiC_{solid} + CO (5)

SiO₂, _{solid} - -> SiO + 1/2O₂ (6)

SiO₂, _{solid} + CO = {SiO} + CO₂ (7)

Al₂O + C_{solid} = 2Al_{liquid} + CO (8)

Among them the greatest product yield is only produced by the reactions leading to formation of silicon carbide. The change of its amount in the reaction mixture is characterized by prompt burst starting from temperature > 1,550°C.
In a temperature interval/range 1,650-2,050°C in the wake of temperature rising the following reactions start to run:

SiO₂,_{solid} + Si_{liquid} = 2SiO (9)

SiO_{gas} + SiC_{solid} = 2Si_{liquid} + CO (10)

SiO₂ + SiC = SiO + Si + CO (11)

With further rise of temperature (above 1,800°C) following reactions are developing.

2Al₂O₃, _{solid}+ 9C_{solid} = Al₄C₃, _{solid} + 6CO (12)

2Al₄C₃, _{solid} + 3SiO₂ = 8Al_{liquid} + 3Si_{liquid} + 6CO (13)

2/3Al₂O₃ + 2SiC + Fe = 2SiFe + 4/3AlFe +2CO (14)

Al₂O₃, _{solid} + 2C = Al₂O + 2CO (15)

Al₂O_{3, solid} + 3C = 2Al₁ + 3CO (16)

Al₂O₃ + SiC = Al₂O + SiO + CO (17)

A specific feature of this temperature interval/range is the formation of aluminum carbide which is easily neutralized in surplus of silica with formation of ferrosilicon aluminum.

At temperatures above 2.050°C the content of silicon carbides in the charge drops substantially and concentration of silicon and aluminum in the metal rises. Whereby the silicon carbide is mainly consumed for interaction with alumina, Si- and Alsuboxides with formation of silicon-aluminum alloy:

2Al₂O₃ + SiC_{liquid} = 4Al_{liquid} + SiO_{gas} + CO (18)

Al₂O_{gas} + SiCsolid = 2Al_{liquid} + Si_{liquid} + CO (19)

Al_{liquid} - -> Al_{gas} (20)

But simultaneously from > 2.100°C temperature level the evaporation of aluminum increases.

### Example 1:

This example presents a ferrosilicon aluminum alloy in the charge of which was added manganese as oxide material besides carbonaceous rock, quartzite and iron turnings (wooden chips if required)

### FeSiAl alloys with manganese

### A. Carbonaceous rock 2.99 tons, size > 20-80 mm

| | |
|---|---|
| Ash content (on dry mass) | 53.4% |
| Volatile matter (on dry mass) | 18.3% |
| Humidity | 4.0% |

### Ash composition:

| | |
|---|---|
| SiO₂ | 63.2% |
| Fe₂O₃ | 2.5% |
| Al₂O₃ | 31.7% |
| CaO | 1.1% |
| TiO₂ | 0.9% |
| MgO | 0.3% |
| S | 0.288% |
| P | 0.012% |

### B. Quartzite - 0.126 tons, size 25-60 mm

| | |
|---|---|
| SiO₂ | 97.5% |
| Al₂O₃ | 1.0% |
| Fe₂O₃ | 0.6% |
| CaO | 0.5% |
| MgO | 0.2% |
| | |
| ∑ (oxides P, S, Na, K, Ti) | < 0.2% (balance) |

### C. Iron turnings - 0.09 tons, size 5-30 mm

| | |
|---|---|
| Feₜₒₜₐₗ | 98,6% |
| Si, Al, C | balance |

### D. Manganese ore 0,457 tons, size 10-60 mm

| | |
|---|---|
| Mn₂O₃ | 53.9% |
| Fe₂O₃ | 7.9% |
| SiO₂ | 26.2% |
| Al₂O₃ | 1.7% |
| CaO | 5.2% |
| TiO₂ | 0.1% |
| MgO | 1.0% |
| S | 0.02% |
| P | 0.02% |
| Ignition losses | 3.96% |

At the end of the melting process is obtained a FeSiAl alloy with Manganese with the following average composition (mass.%):

| | |
|---|---|
| Si | 45.2 |
| Al | 18.8 |
| Mn | 14.6 |
| C | 0.25 |
| Ti | 0.6 |
| Ca | 1.2 |
| P | 0.01 |
| S | 0.001 |
| Fe | balance |

### Example 2:

This example presents a ferrosilicon aluminum alloy in the charge of which was added barium as oxide material besides carbonaceous rock, quartzite and iron turnings (wooden chips if required).

### FeSiAl with barium

### A. Carbonaceous rock 3.03 tons, size > 20-80 mm

| | |
|---|---|
| Ash content (on dry mass) | 55.2% |
| Volatile matter (on dry mass) | 18.7% |
| Humidity | 5.1% |

### Ash composition:

| | |
|---|---|
| SiO₂ | 60.9% |
| Fe₂O₃ | 2.2% |
| Al₂O₃ | 34.2% |
| CaO | 1.5% |
| TiO₂ | 1.0% |
| MgO | 0.12% |
| S | 0.077% |
| P | 0.016% |

### B. Quartzite - 0.397 tons, size 25-60 mm

| | |
|---|---|
| SiO₂ | 97.3% |
| Al₂O₃ | 1.2% |
| Fe₂O₃ | 0.7% |
| CaO | 0.4% |
| (MgO + TiO₂ + P₂O₅ + S + MnO + Cr₂O₃) | < 0.4% - balance |

### C. Iron turnings - 0.091 tons, size 5-30 mm

| | |
|---|---|
| Feₜₒₜₐₗ | 98.6%; |
| Si, Al, C | - balance |

### D. Barium ore - 0.306 tons, size 10-50 mm

| | |
|---|---|
| BaSO₄ | 81.3% |
| SiO₂ | 15.2% |
| Fe₂O₃ | 1.4% |
| Al₂O₃ | 0.82% |
| CaO | 1.2% |
| MgO | 0.06% |
| P₂O₅ | 0.02% |

At the end of the melting process is obtained a FeSiAl alloy with Barium with the following average composition (mass %):

| | |
|---|---|
| Si | 51.3 |
| Al | 20.7 |
| Ba | 10.7 |
| C | 0.15 |
| Ti | 0.6 |
| Ca | 0.8 |
| P | 0.011 |
| S | 0.002 |
| Fe | balance |

### Example 3:

This example presents a ferrosilicon aluminum alloy in the charge of which was added calcium as oxide material besides carbonaceous rock, quartzite and iron turnings (wooden chips if required).

### FeSiAl alloy with calcium

### A. Carbonaceous rock 3.17 tons, size > 20-80 mm

| | |
|---|---|
| Ash content (ondry mass) | 55.2% |
| Volatile matter (on dry mass) | 18.7% |
| Humidity | 4.5% |
| Ash | composition: |
| SiO₂ | 60.9% |
| Fe₂O₃ | 2.2% |
| Al₂O₃ | 34.2% |
| CaO | 1.5% |
| TiO₂ | 1.0% |
| MgO | 0.12% |
| S | 0.077% |
| P | 0.016% |

### B. Quartzite - 0.42 tons, size 25-60 mm

| | |
|---|---|
| SiO₂ | 97.3% |
| Al₂O₃ | 1.2% |
| Fe₂O₃ | 0.7% |
| CaO | 0.4% |
| (MgO + TiO₂ + P₂O₅ + S) | < 0.4% - balance |

### C. Iron turnings - 0.11 tons, size 5-30 mm

| | |
|---|---|
| Feₜₒₜₐₗ | 98.6% |
| Si, Al, C | - balance |

### D. Lime - 0.143 tons, size 10-30 mm

| | |
|---|---|
| SiO₂ | 4.6% |
| Fe₂O₃ | 2.5% |
| Al₂O₃ | 1.3% |
| CaO | 86.4% |
| MgO | 4.4% |
| P₂O₅ | 0.12% |
| Ignition losses | 0.68% |

At the end of the melting is obtained a FeSiAl alloy with Calcium with the following average composition (mass.%):

| | |
|---|---|
| Si | 53.2 |
| Al | 20.5 |
| Ca | 6.5 |
| C | 0.19 |
| Ti | 0.64 |
| P | 0.013 |
| S | 0.001 |
| Fe | balance |

### Example 4:

This example presents a ferrosilicon aluminum alloy in the charge of which was added chrome as oxide material besides carbonaceous rock, quartzite and iron turnings (wooden chips if required).

### FeSiAl alloy with chrome

### A. Carbonaceous rock 3.0 tons, size > 20-80 mm

| | |
|---|---|
| Ash content (on dry mass) | 49.8% |
| Volatile matter (on dry mass) | 18.4% |
| Humidity | 4.1% |

### Ash composition:

| | |
|---|---|
| SiO₂ | 64.8% |
| Fe₂O₃ | 2.6% |
| Al₂O₃ | 30.4% |
| CaO | 0.96% |
| TiO₂ | 1.12% |
| MgO | 0.1% |
| S | 0.012% |
| P | 0.009% |

### B. Quartzite - 0.455 tons, size 25-60 mm

| | |
|---|---|
| SiO₂ | 97.2% |
| Al₂O₃ | 1.0% |
| Fe₂O₃ | 0.6% |
| CaO | 0.2% |
| (MgO + TiO₂ + P₂O₅ + S) | < 1.0% - balance |

### C. Iron turnings - 0.1 tons, size 5-30 mm

| | |
|---|---|
| Feₜₒₜₐₗ | 98.6% |
| Si, Al, C | - balance |

### D. Chrome ore 0.325 tons, size 8-50 mm

| | |
|---|---|
| Cr₂O₃ | 47.35% |
| FeO | 13.57% |
| SiO₂ | 9.5% |
| Al₂O₃ | 7.5% |
| CaO | 0.4% |
| MgO | 18.0% |
| S | 0.01% |
| P | 0.008% |
| Ignition losses | 3.66% |

At the end of the melting process is obtained a FeSiAl alloy with chrome with the following average composition (mass.%):

| | |
|---|---|
| Si | 52.4 |
| Al | 18.1 |
| Cr | 16.0 |
| C | 0.24 |
| Ti | 0.50 |
| Ca | 0.63 |
| P | 0.011 |
| S | 0.001 |
| Fe | balance |

### Example 5:

This example presents a ferrosilicon aluminum alloy in the charge of which was added vanadium as oxide material besides carbonaceous rock, quartzite and iron turnings (wooden chips if required).

### FeSiAl alloy with vanadium

### A. Carbonaceous rock 2.93 tons, size > 20-80 mm

| | |
|---|---|
| Ash content (on dry mass) | 53.4% |
| Volatile matter (on dry mass) | 18.1% |
| Humidity | 4.7% |
| Ash composition: | |
| SiO₂ | 62.2% |
| Fe₂O₃ | 2.6% |
| Al₂O₃ | 32.5% |
| CaO | 1.4% |
| TiO₂ | 1.14% |
| MgO | 0.14% |
| S | 0.01% |
| P | 0.011% |

### B. Quartzite - 0.54 tons, size 25-60 mm

| | |
|---|---|
| SiO₂ | 97.5% |
| Al₂O₃ | 1.2% |
| Fe₂O₃ | 0.7% |
| CaO | 0.4% |
| (MgO + TiO₂ + P₂O₅ + S) | < 0.2% - balance |

### C. Iron turnings - 0.118 tons, size 5-30 mm

| | |
|---|---|
| Feₜₒₜₐₗ | 98.6% |
| Si, Al, C | - balance |

### D. Vanadium pentoxide briquettes (V₂O₅) 0.15 tons, size 10-30 mm

| | |
|---|---|
| V₂O₅ | 95.0% |
| SiO₂ | 0.3% |
| Fe₂O₃ | 0.5% |
| Al₂O₃ | 0.5% |
| CaO | 0.2% |
| K₂O+Na₂O | 0.4% |
| P₂O₅ | 0.09% |
| Ignition losses | 3.01% |

At the end of the melting process is obtained a FeSiAl alloy with vanadium with the following average composition (mass.%):

| | |
|---|---|
| Si | 54.0 |
| Al | 18.5 |
| V | 7.4 |
| Ca | 1.0 |
| C | 0.21 |
| Ti | 0.60 |
| P | 0.007 |
| S | 0.001 |
| Fe | balance |

### Example 6:

This example presents a ferrosilicon aluminum alloy in the charge of which was added titanium as oxide material besides carbonaceous rock, quartzite and iron turnings (wooden chips if required).

### FeSiAl alloy with titanium

### A. Carbonaceous rock 2.88 tons, size > 20 - 80 mm

| | |
|---|---|
| Ash content (on dry mass) | 53.7% |
| Volatile matter (on dry mass) | 17.5% |
| Humidity | 4.2% |
| Ash composition: | |
| SiO₂ | 63.5 |
| Fe₂O₃ | 2.3% |
| Al₂O₃ | 31.4% |
| CaO | 1.7% |
| TiO₂ | 0.96% |
| MgO | 0.12% |
| S | 0.01% |
| P | 0.009% |

### B. Quartzite - 0.36 tons, size 25 - 60 mm

| | |
|---|---|
| SiO₂ | 97.5% |
| Al₂O₃ | 1.2% |
| Fe₂O₃ | 0.7% |
| CaO | 0.4% |

### C. Iron turnings - 0.129 tons, size 5 - 30 mm

| | |
|---|---|
| Feₜₒₜₐₗ | 98.6% |
| Si, Al, C | - balance |

### D. Rich titanium slag 0.26 tons, size 10 - 40 mm

| | |
|---|---|
| SiO₂ | 9.67% |
| Fe₂O₃ | 16.8% |
| Al₂O₃ | 3.60% |
| TiO₂ | 63.2 |
| CaO | 3.6% |
| MgO | 1.72% |
| P₂O₅ | 0.008% |
| V₂O₅ | 1.40% |
| Humidity | 1.0% |

At the end of the melting process is obtained a FeSiAl alloy with titanium with the following average composition (mass. %):

| | |
|---|---|
| Si | 49.5 |
| Al | 18.7 |
| Ti | 7.7 |
| Ca | 1.4 |
| V | 0.2 |
| C | 0.22 |
| P | 0.007 |
| S | 0.001 |
| Fe | - balance |

### Example 7:

This example presents a refined ferrochrome alloy in the charge of which besides chrome ore was added FeSiAl alloy as reducing material.

### A. Chrome ore 2.29 tons, size 5 - 15 mm

| | |
|---|---|
| Cr₂O₃ | 49.5% |
| FeO | 11.2% |
| SiO₂ | 8.6% |
| Al₂O₃ | 7.5% |
| CaO | 0.22% |
| MgO | 18.5% |
| S | 0.023% |
| P | 0.007% |
| Ignition losses | 4.45% |

### B. Lime - 1.3 ton, size 10 - 25 mm

| | |
|---|---|
| SiO₂ | 4.6% |
| Fe₂O₃ | 0.3% |
| Al₂O₃ | 0.5% |
| CaO | 90.1% |
| MgO | 2.4% |
| P₂O₅ | 0.1% |
| Ignition losses | 2.0% |

### C. FeSiAl - 0.5 ton, size 5 - 10 mm

| | |
|---|---|
| Si | 58.6 |
| Al | 19.2 |
| Fe | 20.32 |
| Ca | 0.74 |
| Ti | 0.85 |
| C | 0.28 |
| P | 0.01 |
| S | 0.001 |

At the end of the melting process is obtained a FeCr alloy with the following average composition (mass.%):

| | |
|---|---|
| Cr | 71.3 |
| Si | 1.45 |
| Al | 0.20 |
| C | 0.08 |
| P | 0.01 |
| S | 0.02 |
| Fe | balance |

### Example 8:

The following example presents the process of production of 1 ton magnesium metal with the use of the FeSiAl alloy as reducing agent. The beginning of the process includes briquetting of the crushed doloma (calcined lime dolomite) and FeSiAl with size 0.1 - 5 mm. The reducing process is running for 8 hours in a retort at 1.200°C and vacuum 10⁻² atm.

### A. Doloma - 1.7 tons, size 0.1 - 2.0 mm

| | |
|---|---|
| CaO | 50.3% |
| MgO | 35.5% |
| SiO₂ | 1.8% |
| FeO | 1.0% |
| Al₂O₃ | 0.8% |
| P₂O₅ | 0.03% |
| Ignition losses | 10.57% |

### B. FeSiAl - 0.25 ton, size 0.1 - 5 mm

| | |
|---|---|
| Si | 77.8% |
| Al | 7.2% |
| Ca | 0.70% |
| Ti | 0.50% |
| C | 0.12% |
| P | 0.009% |
| S | 0.002% |
| Fe | balance |

At the end of the smelting process is obtained a pure magnesium metal (99.9%) and slag.

### List of references

- 1: carbonaceous rock
- 2: bin
- 3: vibration feeder
- 4: conveyor
- 5: crusher
- 6: screen
- 7: quartzite
- 8: bin
- 9: vibration feeder
- 10: conveyor belt
- 11: crusher unit
- 12: screen
- 13: hopper
- 14: hopper
- 15: hopper
- 15a: iron turnings
- 16: dosing strain-gage weigher
- 17: dosing strain-gage weigher
- 18: dosing strain-gage weigher
- 19: belt conveyer
- 20: transport equipment
- 21: Søderberg electrodes
- 22: cone
- 23: melting furnace

- B: hopper
- H: wood chips

## Claims

1. Method of producing FeSiAl alloys wherein a carbonaceous rock with an ash content > 50% to < 65%, is being mixed with quartzite (7), iron-bearing material (15a), and if required wood chips (H) or high volatile coal, in a preset ratio of the charge components and the homogenized charge material is being loaded into a melting furnace (23) for melting of FeSiAl alloys, wherein the chemical composition of the ash content of the mineral part of the charged carbonaceous rock comprises,
| | |
|---|---|
| Fe₂O₃ | 1.5 - 4.5% |
| SiO₂ | 55 - 65% |
| Al₂O₃ | 32 - 34% |
| CaO | 0.3 - 3% |
| MgO | 0.3 - 2% |
| TiO₂ | up to 1.5% |
| S | 0.2 - 0.4% |
| P | 0.01 - 0.05% |

2. Method under claim 1, wherein the charge materials are mixed and homogenized outside the melting furnace, and then the homogenized charge is loaded dosed into the melting furnace equipped with electrodes (22) cone up, and then the FeSiAl alloy is being smelted.

3. Method under claims 1 or 2, wherein the carbonaceous rock (1) has a size > 20 to 80 mm, the quartzite (7) has a size 25 to 60 mm and the iron-bearing material (15a) has a size 5 to 100 mm, in particular 5 to 50 mm.

4. Method under one of the claims 1 - 3, wherein the wood chips (H) or the high-volatile coal has a size 50 - 100 mm.

5. Method under one of the claims 1 - 4, wherein while using wood chips (H) the raw material has > 50 % of volatile matter.

6. Method under one of the claims 1 - 5, wherein while using high-volatile coal the raw material has > 40% volatile matter.

7. Method under one of the claims 1 - 6, wherein the charge materials carbonaceous rock (1), quartzite (7) and iron-bearing material (15a), if required wood chips (H) or high-volatile coal are stored in separate bins (13,14,15,B) with the required fraction size and, depending on the capacity of the melting furnace, are mixed in a preset ratio and are loaded dosed into the melting furnace equipped with Søderberg electrodes (21).

8. Method under one of the claims 1 - 7, wherein carbonaceous rock (1) with high electrical resistance is used as a raw material, in particular with an electrical resistance between 10⁻⁶ and 10⁻¹ Ω.

9. Method under one of the claims 1 - 8, wherein, if required, the following oxide materials containing: Mn, Ca, Ba, Cr, V, Ti are being individually added to the charge materials.

10. Method under claim 9, wherein the quantity of the oxide material added, if required, to the composition of the charge, secures the following composition:
| | |
|---|---|
| Ca | 0.05 - 7.0% |
| Ba | 1.5 - 15% |
| V | 0.5 - 10% |
| Ti | 0.05 - 10% |
| Mn | 5 - 20% |
| Cr | 5 - 20% |

11. Method under one of the Claims 1 - 10, wherein FeSiAl alloys with the following chemical composition is being melted in the melting furnace (mass-%):
| | |
|---|---|
| Si | 40 - 85 % |
| Al | > 1 - < 40 % |
| C | > 0.001 - < 1.0 % |
| Ti | max 2 % |
| Ca | < 1.0 % |
| P | < 0.05 % |
| S | < 0.1% |
| Mn | max 0.7 % |
| Fe | balance |

12. Method under one of the Claims 9 or 10, wherein manganese in form of oxide material is added, if required, to the charge material whereby a FeSiAl alloy with the following chemical composition is melted in the melting furnace:
Si - 40 - 65 %
Al - > 1 - < 40 %
C - > 0.001 - < 0.40 %
Ti - max. 1.5 %
Ca - < 4.0 %
P - < 0.05 %
S - < 0.05 %
Mn - 5 - 20 %
Fe balance
and in the same manner, if required, are added Ca, Ba, V, Ti and Cr in form of oxide materials to secure the content of these elements, each of them individually as per Claim 10.

## Patentansprüche

1. Verfahren zur Herstellung von Eisen-Silicium-Aluminium-Legierungen, wobei ein kohlehaltiger Stein mit einem Aschegehalt von > 50% bis < 65% mit Quarzit (7), eisenhaltigem Material (15a) und, falls erforderlich, Holzspänen (H) oder Flammkohle in einem vorgegebenen Verhältnis der Einsatzkomponenten gemischt wird und das homogenisierte Einsatzmaterial in einen Schmelzofen (23) geladen wird zur Erschmelzung von Eisen-Silicium-Aluminium-Legierungen, wobei die chemische Zusammensetzung des Aschegehalts des mineralischen Anteils des kohlehaltigen Einsatzsteines aufweist:
| | |
|---|---|
| Fe₂O₃ | 1,5 - 4,5 % |
| SiO₂ | 55 - 65 % |
| Al₂O₃ | 32 - 34 % |
| CaO | 0,3 - 3 % |
| MgO | 0,3-2% |
| TiO₂ | bis zu 1,5 % |
| S | 0,2 - 0,4% |
| P | 0,01 - 0,05 %. |

2. Verfahren gemäß Anspruch 1, wobei die Einsatzmaterialien außerhalb des Schmelzofens gemischt und homogenisiert werden und dann das homogenisierte Einsatzmaterial dosiert in den Schmelzofen geladen wird, der mit Elektroden (22) mit der Kegelspitze nach oben ausgerüstet ist, und dann die Eisen-Silicium-Aluminium-Legierung erschmolzen wird.

3. Verfahren gemäß Anspruch 1 oder 2, wobei der kohlehaltige Stein (1) eine Größe von > 20 bis 80 mm aufweist, das Quarzit (7) eine Größe von 25 bis 60 mm und das eisenhaltige Material (15a) eine Größe von 5 bis 100 mm, insbesondere von 5 bis 50 mm aufweist.

4. Verfahren gemäß einem der Ansprüche 1 bis 3, wobei die Holzspäne (H) oder die Flammkohle eine Größe von 50 - 100 mm aufweisen/aufweist.

5. Verfahren gemäß einem der Ansprüche 1 bis 4, wobei das Rohmaterial bei Verwendung von Holzspänen (H) > 50% flüchtige Bestandteile aufweist.

6. Verfahren gemäß einem der Ansprüche 1 bis 5, wobei das Rohmaterial bei Verwendung von Flammkohle > 40% flüchtige Bestandteile aufweist.

7. Verfahren gemäß einem der Ansprüche 1 bis 6, wobei die Einsatzmaterialien kohlehaltiger Stein (1), Quarzit (7) und eisenhaltiges Material (15a), falls erforderlich Holzspäne (H) oder Flammkohle, in getrennten Behältern (13, 14, 15, B) mit der erforderlichen Größe der Bruchstücke gelagert werden, und abhängig von der Kapazität des Schmelzofens in einem vorab eingestellten Verhältnis gemischt und dosiert in den mit Søderberg-Elektroden (21) ausgestatteten Schmelzofen geladen werden.

8. Verfahren gemäß einem der Ansprüche 1 bis 7, wobei kohlehaltiger Stein (1) mit hohem elektrischen Widerstand als Rohmaterial verwendet wird, insbesondere mit einem elektrischen Widerstand zwischen 10⁻⁶ und 10⁻¹ Ω.

9. Verfahren gemäß einem der Ansprüche 1 bis 8, wobei, falls erforderlich, die folgenden Oxidmaterialien enthaltend: Mn, Ca, Ba, Cr, V, Ti einzeln zu den Einsatzstoffen hinzugegeben werden.

10. Verfahren gemäß Anspruch 9, wobei die, falls erforderlich, zu der Zusammensetzung der Charge hinzugegebene Menge an Oxidmaterial die folgende Zusammensetzung sicherstellt:
| | |
|---|---|
| Ca | 0,05 - 7,0 % |
| Ba | 1,5 - 15 % |
| V | 0,5 - 10% |
| Ti | 0,05 - 10% |
| Mn | 5 - 20% |
| Cr | 5 - 20%. |

11. Verfahren gemäß einem der Ansprüche 1 bis 10, wobei Eisen-Silicium-Aluminium-Legierungen mit der folgenden chemischen Zusammensetzung in dem Schmelzofen erschmolzen werden (in Masse-%):
| | |
|---|---|
| Si | 40 - 85% |
| Al | > 1 - < 40% |
| C | > 0,001 - < 1,0% |
| Ti | max. 2 % |
| Ca | < 1,0% |
| P | < 0,05% |
| S | < 0,1% |
| Mn | max. 0,7% |
| Fe | Rest |

12. Verfahren gemäß einem der Ansprüche 9 oder 10, wobei Mangan in Form von Oxidmaterial, falls erforderlich, dem Einsatzmaterial hinzugegeben wird, wobei eine Eisen-Silicium-Aluminium-Legierung mit der folgenden chemischen Zusammensetzung in dem Schmelzofen erschmolzen wird:
| | |
|---|---|
| Si | 40 - 65% |
| Al | > 1 - < 40% |
| C | > 0,001 - < 0,40% |
| Ti | max. 1,5 % |
| Ca | < 4,0% |
| P | < 0,05% |
| S | < 0,05% |
| Mn | 5 - 20% |
| Fe | Rest |
und auf dieselbe Weise werden, falls erforderlich, Ca, Ba, V, Ti und Cr in Form von Oxidmaterial jeweils einzeln gemäß Anspruch 10 zugegeben, um den Gehalt dieser Elemente sicherzustellen.

## Revendications

1. Procédé de fabrication d'alliages fer-silicium-aluminium, dans lequel une roche carbonée ayant une teneur en cendres de > 50% à < 65 % est mélangée avec du quartzite (7), de la matière contenant du fer (15a) et, si nécessaire, des copeaux de bois (H) ou du charbon à teneur élevée en matières volatiles, dans un rapport prédéfini des composants de charge et le matériau de charge homogénéisé est introduit dans un four de fusion (23) pour la fusion d'alliages fer-silicium-aluminium, la composition chimique de la teneur en cendres de la partie minérale de la roche carbonée chargée comprenant :
| | |
|---|---|
| Fe₂O₃ | 1,5 - 4,5 % |
| SiO₂ | 55 - 65 % |
| Al₂O₃ | 32 - 34 % |
| CaO | 0,3 - 3 % |
| MgO | 0,3 - 2 % |
| TiO₂ | bis zu 1,5 % |
| S | 0,2 - 0,4 % |
| P | 0,01 - 0,05 %. |

2. Procédé selon la revendication 1, dans lequel les matériaux de charge sont mélangés et homogénéisés à l'extérieur du four de fusion et ensuite la charge homogénéisée est introduite d'une manière dosée dans le four de fusion équipé d'électrodes (22), dont les sommets de cône sont dirigés vers le haut, et ensuite l'alliage fer-silicium-aluminium est élaboré.

3. Procédé selon la revendication 1 ou la revendication 2, dans lequel la roche carbonée (1) a une taille de > 20 à 80 mm, le quartzite (7) a une taille de 25 à 60 mm et la matière contenant du fer (15a) a une taille de 5 à 100 mm, notamment de 5 à 50 mm.

4. Procédé selon l'une des revendications 1 à 3, dans lequel les copeaux de bois (H) ou le charbon à teneur élevée en matières volatiles comprend une taille de 50 à 100 mm.

5. Procédé selon l'une des revendications 1 à 4, dans lequel la matière première comprend > 50 % de matières volatiles, si on utilise des copeaux de bois (H).

6. Procédé selon l'une des revendications 1 à 5, dans lequel la matière première comprend > 40 % de matières volatiles, si on utilise du charbon à teneur élevée en matières volatiles.

7. Procédé selon l'une des revendications 1 à 6, dans lequel les matériaux de charge, à savoir de la roche carbonée (1), du quartzite (7) et de la matière contenant du fer (15a), si nécessaire, des copeaux de bois (H) ou du charbon à teneur élevée en matières volatiles, sont stockés dans des conteneurs séparés (13, 14, 15, B) avec la taille de fraction nécessaire et, en fonction de la capacité du four de fusion, ils sont mélangés dans un rapport prédéfini and introduits de manière dosée dans le four de fusion équipé d'électrodes Søderberg (21).

8. Procédé selon l'une des revendications 1 à 7, dans lequel de la roche carbonée (1) ayant une résistance électrique élevée est utilisée comme matière première, notamment ayant une résistance électrique comprise entre 10⁻⁶ et 10⁻¹ Ω.

9. Procédé selon l'une des revendications 1 à 8, dans lequel, si nécessaire, les matériaux d'oxyde suivants contenant : Mn, Ca, Ba, Cr, V, Ti sont individuellement ajoutés aux matériaux de charge.

10. Procédé selon la revendication 9, dans lequel la quantité de matériaux d'oxyde ajoutée à la composition de la charge, si nécessaire, assure la composition suivante :
| | |
|---|---|
| Ca | 0,05 - 7,0 % |
| Ba | 1,5 - 15% |
| V | 0,5 - 10% |
| Ti | 0,05 - 10% |
| Mn | 5 - 20% |
| Cr | 5 - 20%. |

11. Procédé selon l'une des revendications 1 à 10, dans lequel les alliages fer-silicium-aluminium ayant la composition chimique suivante sont élaborés dans le four de fusion (en % en masse) :
| | |
|---|---|
| Si | 40 - 85% |
| Al | > 1 - < 40% |
| C | > 0,001 - < 1,0% |
| Ti | max. 2 % |
| Ca | < 1,0% |
| P | < 0,05% |
| S | < 0,1% |
| Mn | max. 0,7% |
| Fe | reste. |

12. Procédé selon l'une des revendications 9 ou 10, dans lequel le manganèse en forme de matériau d'oxyde est ajouté, si nécessaire, au matériau de charge, grâce à quoi un alliage fer-silicium-aluminium ayant la composition chimique suivante est élaboré dans le four de fusion :
| | |
|---|---|
| Si | 40 - 65% |
| Al | > 1 - < 40% |
| C | > 0,001 - < 0,40% |
| Ti | max. 1,5 % |
| Ca | < 4,0% |
| P | < 0,05% |
| S | < 0,05% |
| Mn | 5 - 20% |
| Fe | reste |
et de la même manière, Ca, Ba, V, Ti et Cr en forme de matériaux d'oxyde sont ajoutés, si nécessaire, pour assurer la teneur en ces éléments, chacun d'eux individuellement selon la revendication 10.
